# EUROPEAN PATENT SPECIFICATION

(11) **EP 1 816 364 B1**
(45) Date of publication and mention of the grant of the patent: **14.11.2012**
(21) Application number: 06025089.1
(22) Date of filing: 05.12.2006
(51) Int. Cl.: F16D 3/06

(54) **Coupling apparatus**
Kupplungseinrichtung
Dispositif d'accouplement

(30) Priority: 14.12.2005 FI 20051284
(43) Date of publication of application: 08.08.2007
(73) Proprietor: Vaahto OY, 15860 Hollola (FI)
(72) Inventor: Vaahto, Antti, 15141 Lahti (FI); Aho, Erkki, 47200 Elimäki (FI)
(74) Representative: Laine, Terho Tapio

(56) References cited:
- GB-A- 216 906
- GB-A- 2 225 826
- US-A- 4 270 367
- US-A- 5 195 840

## Description

### Background of the invention

This invention relates to a coupling apparatus for a rod, such as a coating rod or the rod of a metering rod, used in a paper or board machine or equivalent, in which apparatus, there is between a first coupling element and a second coupling element a coupling piece the length of which is changeable in the axial direction for connecting the rod to an actuator, in which coupling piece the first coupling element and the second coupling element have been coupled for conveying rotational force.

According to prior art, in a metering rod coating station or equivalent, the rod, which is usually slotted, is rotated from its one end or both ends by means of a drive, whereby it is possible to control by means of prior art the amount spreading on the web of adhesive or coating material spread by means of the rod.

From publication FI 111402 is known a method in an actuator of a metering rod coating station, in which axial forces caused by a slotted rod can be cancelled out by a counterforce brought to the rod via a pivot shaft and in which the counterforce is brought to the rod from the drive side. The publication also describes an arrangement for connecting the rod to an actuator, in which arrangement, there is a pivot shaft which is telescopic and, at one end of which pivot shaft, there are fastening elements in which a slotted rod has been installed. At the other end of the pivot shaft, the shaft of a drive motor has been arranged. At the end of the rod according to the arrangement, there is a quick clamping which is arranged such that it is removable.

GB216906 shows an elastic coupling for shafts or rods axially movable by the push or pull action of either of the coupled members, consisting in a single resilient member connected to each of the said two members by means of a universal joint, and adapted to take up by compression or by expansion any difference in the relative distance of the axial movements of the two members.

US 5195840, GB 2225826, US 4270367 also present different solutions for a coupling.

Arrangements according to prior art include flaws. In known arrangements, the axial forces travel along the pivot shaft or equivalent. As the task of the pivot shaft is to convey a rotating force to the rod or to receive a force counter to the rotating force, possibly caused by the rod or something other, the travel of axial forces along the pivot shaft is undesirable. A flaw of prior-art arrangements is also the relatively complex structure which complicates and slows down the servicing.

### Brief description of the invention

It is characteristic for the coupling apparatus according to the invention that the protecting part is a combination of one or more spring pieces, embedded in a rubber piece, and which protecting part functions as a preload element, and that on the end surface and/or the vertical surface of the first coupling element is formed a toothing or equivalent for conveying rotational forces to the rod.

Furthermore, the method and the apparatus according to the invention are characterised by what is stated in the appended dependent claims 2-7.

The now presented apparatus according to the invention has some considerable advantages compared to known solutions. By means of the now presented device according to the invention, it is possible to convey axial forces over the coupling piece, which is usually a pivot shaft, (over the ends of the pivot shaft) along a protecting part or equivalent to the rod, whereby no axial forces are directed to the coupling piece itself. Furthermore in known arrangements, the structure is quite laborious to open and requires thus also a relatively lot of time. By means of an arrangement according to the invention is then provided an extremely reliable and quick coupling arrangement which is removable without separate tools. In addition, the arrangement according to the invention functions in a failure situation as it were a fuse (torque guard) when the forces directed on the rod increase too much, as there are toothings at the end (ends) of the rod and the second coupling element. The rod is freely supported by this method to the cradle of the rod in the cross-direction of the machine and requires no separate auxiliary bearings and the rod remains almost stationary in the cross-direction.

### Brief description of the figures

The invention will now be described in more detail by means of examples with reference to drawings 1 and 2 in which
Fig. 1 shows a coupling apparatus,
Fig. 2 shows a front view of a rod used in the coupling apparatus.

### Detailed description of the invention

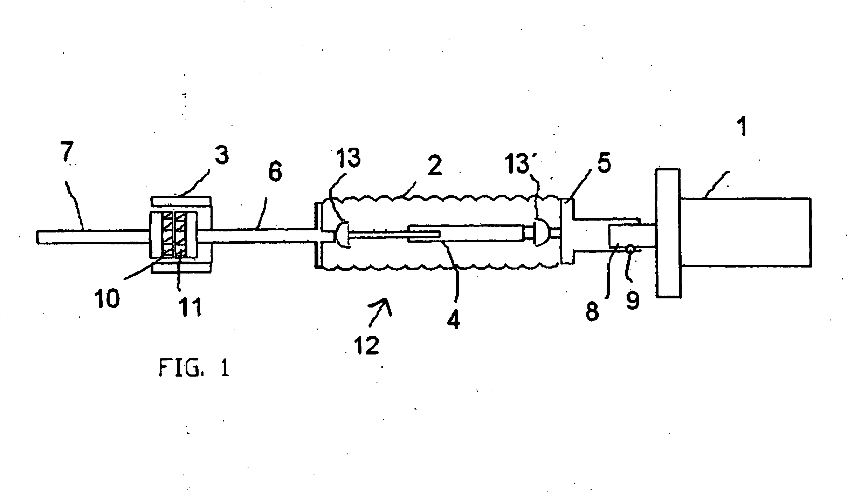

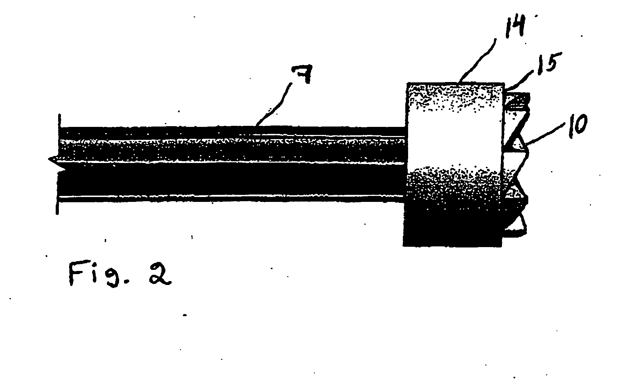

Figs. 1 and 2 show an arrangement of a coupling apparatus according to the invention.

According to Fig. 1, to an actuator, which can be an electric motor, a hydraulic motor or some other equivalent actuator, is coupled a first coupling element 5 on a shaft 8 of the actuator. On the inner surface of the first coupling element 5 (connection area of the shaft and the coupling element), there is a slotting, and correspondingly the shaft 8 is slotted so that it fits to the slotting on the inner surface of the first coupling element 5, whereby when the shaft 8 rotates torsion shifts to the first coupling element 5. A securing element 9 or equivalent secures the connection of the shaft and the coupling element. The connection is thus also quickly removable by removing the securing element which is usually a pin or equivalent. Said coupling way is known of the power transmission of e.g. agricultural machinery, such as tractors. Also other coupling ways are possible than here described.

To the first coupling element 5 is arranged a coupling piece 4. The length of the coupling piece 4 is changeable in the axial direction (telescopic) i.e. it can grow longer or shorter. The coupling piece 4 can be a telescopic pivot shaft, a cylindrical shaft arrangement, a slotted telescopic shaft or some other equivalent flexible shaft. The coupling piece can also allow the change of an angle, if required, i.e., in other words, there is no need for the first coupling element 5 and the second coupling element 6 to be on the same level.

One end of the coupling piece is correspondingly fastened to the second coupling element 6, whereby the rotating motion of the shaft 8 caused by the actuator 1 is conveyed via the first coupling element 5 and the coupling piece 4 to the second coupling element 6.

At one end of the second coupling element 6, there is a toothing or equivalent formed on the end surface and/or vertical surface, and correspondingly at the end of a rod 7 there is a toothing which fits to the toothing at the end of the second coupling element 6, whereby when the second coupling element 6 rotates the rotating motion shifts to the rod 7 by means of the toothing or equivalent. The toothing can be at both ends of the rod 7, whereby it is possible to rotate the rod to the same rotation direction by two separate drives. Said rod toothing is described in more detail in Fig. 2.

In order to the toothings to remain facing each other and not to move in the lateral direction in relation to each other, a cylindrical adapter piece 3 is installed to one end of either the rod 7 or the second coupling element 6, whereby toothings 10, 11 are supported also in other than axial direction, and thus are not able to move in the lateral direction.

Around the pivot shaft 4, there is a protecting part 2 which functions also as a preload element. Being around the pivot shaft 4, the protecting part 2 prevents the pivot shaft 4 from dirtying. The protecting part is installed in such a way that it is fastened outside fastening ends 13 and 13' of the pivot shaft passing inside it, whereby the protecting part functions also as a preload element so that when bringing the first coupling element 5 and the second coupling element 6 closer to each other the pivot shaft 4 becomes shorter and the protecting part 2 receives the axial forces. Correspondingly, when bringing the first coupling element 5 and the second coupling element father from each other, the protecting part 2 can function so that it functions correspondingly as a "counterforce" to the axial force trying e.g. to prevent the extreme lengthening of the pivot shaft.

There is no need for the protecting part 2 to be unitary. The protecting part 2 can be formed so that a spring or equivalent is connected (embedded) to a rubber cover or equivalent, whereby the spring is not visible. The material of the protecting part 2 can be rubber, plastic, metal etc. or combinations of suitable materials.

As previously described, also the axial forces coming from the rod 7 are conveyed via the second coupling element 6 and the protecting part 2 to the first coupling element 5, and from there further via the shaft 8 of the actuator to the actuator 1 No axial forces are then directed to the pivot shaft 4.

When replacing the rod 7 with another rod, the rod 7 is replaced so that the pivot shaft 4 is "squeezed" shorter, whereby the toothings 11 of the rod 7 and the second coupling element move apart from each other. The rod 7 can be replaced with another one when the toothings are adequately far from each other and one of the toothed ends is outside the adapter piece 3.

The whole coupling apparatus is also quickly replaceable/removable by removing the coupling between the shaft 8 of the actuator and the first coupling element 5, which coupling is then quick-releasable, and by pulling the toothed pieces 7 and 6 apart after this, whereby it is possible to remove the whole coupling apparatus for e.g. servicing or replacement.

Fig. 2 shows a toothing at one end of the rod 7. At the end of the rod 7, there is a bulge or as if a flange-like piece in which the toothing 10 is formed on the end surface and/or side surface. The toothing 10 can be different from the one shown in the figure. The rod 7 can be smooth or slotted.

It is well known by those skilled in the art that the different embodiments of the invention are not solely limited to the examples described above, and thus they may vary within the scope of the appended claims.

In an alternative arrangement according to the invention, there can be a spring or equivalent inside the pivot shaft or immediately in connection with it, which spring pushes or pulls the pivot shaft as if longer or shorter, the protecting part functioning as a counterforce for these forces and compensating them. The coupling apparatus is then as if "length-compensated" to both directions.

## Claims

1. A coupling apparatus (12) for a rod (7), such as a coating rod or the rod of a metering rod, used in a paper or board machine or equivalent, in which apparatus, there is between a first coupling element (5) and a second coupling element (6) a coupling piece (4) the length of which is changeable in the axial direction for connecting the rod to an actuator (1), in which coupling piece (4) the first coupling element (5) and the second coupling element (6) have been coupled for conveying rotational force, and that a protecting part (2) is arranged around the coupling piece (4), between the first and the second coupling element, wherein the protecting part is a combination of one or more spring pieces, embedded in a rubber piece, and which protecting part functions as a preload element, and **characterised in that** on the end surface and/or the vertical surface of the first coupling element (6) is formed a toothing (10) or equivalent for conveying rotational forces to the rod (7).

2. A coupling apparatus according to claim 1, **characterised in that** on the end surface and/or the vertical surface of the rod (7) is formed a toothing or equivalent for conveying rotational forces.

3. A coupling apparatus according to claim 1, **characterised in that** the coupling piece is a telescopic pivot shaft (4) or equivalent flexible shaft.

4. A coupling apparatus according to claim 3, **characterised in that** the protecting part is fastened in the axial direction outside fastening ends (13 and 13') of the pivot shaft (4).

5. A coupling apparatus according to claim 4, **characterised in that** the protecting part is fastened to the first coupling element (5) and the second coupling element (6).

6. A coupling apparatus according to claim 1, **characterised in that** the protecting part (2) functions as a preload element in the axial direction.

7. A coupling apparatus according to claim 1, **characterised in that** the rod is freely supported to the cradle of the rod in the cross-direction of the machine.

## Patentansprüche

1. Verbindungsvorrichtung (12) für einen Stab (7), wie einem Ausbringungsstab oder den Stab eines Dosierungsstabs, benutzt in einer Papier- oder Pappenmaschine oder dergleichen, in welcher Vorrichtung zwischen einem ersten Verbindungelement (5) und einem zweiten Verbindungselement (6) ein Verbindungsstück (4) vorhanden ist, dessen Länge in der Axialrichtung zum Verbinden des Stabs mit einem Betätigungsmittel (1) änderbar ist, mittels welchem Verbindungsstück (4) das erste Verbindungselement (5) und das zweite Verbindungselement (6) zum Übertragen einer Rotationskraft verbunden sind, wobei ein Schutzelement (2) um das Verbindungsstück (4) herum angeordnet ist, zwischen dem ersten und dem zweiten Verbindungselement, wobei das Schutzelement eine Kombination eines oder mehrerer Federstücke eingebettet in einem Gummistück ist, und das Schutzelement als Vorspannelement agiert, **dadurch gekennzeichnet, dass** an der Endfläche und/oder der vertikalen Fläche des ersten Verbindungselements 6 eine Verzahnung (10) oder Entsprechendes zum Übertragen von Rotationskräften auf die Stange (7) ausgebildet ist.

2. Verbindungsvorrichtung nach Anspruch 1, **dadurch gekennzeichnet, dass** an der Endfläche und/oder der vertikalen Fläche des Stabs (7) eine Verzahnung oder Entsprechendes zum Übertragen von Rotationskräften ausgebildet ist.

3. Verbindungsvorrichtung nach Anspruch 1, **dadurch gekennzeichnet, dass** das Verbindungsstück eine teleskopische Drehachse 4 oder eine äquivalente flexible Achse ist.

4. Verbindungsvorrichtung nach Anspruch 3, **dadurch gekennzeichnet, dass** das Schutzelement in der Axialrichtung außerhalb von Befestigungsenden (13) und (13') der Drehachse (4) befestigt ist.

5. Verbindungsvorrichtung nach Anspruch 4, **dadurch gekennzeichnet, dass** das Schutzelement an dem ersten Verbindungselement (5) und dem zweiten Verbindungselement (6) befestigt ist.

6. Verbindungsvorrichtung nach Anspruch 1, **dadurch gekennzeichnet, dass** das Schutzelement (2) in der Axialrichtung als Vorspannungselement wirkt.

7. Verbindungsvorrichtung nach Anspruch 1, **dadurch gekennzeichnet, dass** die Stange in der Querrichtung der Maschine an der Wiege der Stange frei gestützt ist.

## Revendications

1. Dispositif d'accouplement (12) pour une barre (7) telle qu'une barre de couchage ou une barre de calibrage utilisée dans une machine à papier ou une machine à carton ou une machine équivalente, dans lequel il y a entre un premier élément d'accouplement (5) et un second élément d'accouplement (6) une pièce d'accouplement (4) dont la longueur peut être modifiée dans le sens axial pour relier ladite barre à un actionneur (1) et dans laquelle le premier élément d'accouplement (5) et le second élément d'accouplement (6) ont été accouplés pour transmettre une force de rotation, une partie de protection (2) étant disposée autour de la pièce d'accouplement (4), entre les premier et second éléments d'accouplement, étant précisé que la partie de protection est une combinaison d'une ou plusieurs pièces à ressort encastrées dans une pièce en caoutchouc et fonctionne comme un élément de précontrainte,
**caractérisé en ce qu'**une denture (10) ou un dispositif équivalent est formé sur la surface d'extrémité et/ou sur la surface verticale du premier élément d'accouplement (6), pour transmettre les forces de rotation à la barre (7).

2. Dispositif d'accouplement selon la revendication 1, **caractérisé en ce qu'**une denture ou un dispositif équivalent est formé sur la surface d'extrémité et/ou sur la surface verticale de la barre (7), pour transmettre les forces de rotation.

3. Dispositif d'accouplement selon la revendication 1, **caractérisé en ce que** la pièce d'accouplement est constituée par un axe de pivot télescopique (4) ou un axe flexible équivalent.

4. Dispositif d'accouplement selon la revendication 3, **caractérisé en ce que** la partie de protection est fixée à l'extérieur d'extrémités de fixation (13 et 13') de l'axe de pivot (4), dans le sens axial.

5. Dispositif d'accouplement selon la revendication 4, **caractérisé en ce que** la partie de protection est fixée au premier élément d'accouplement (5) et au second élément d'accouplement (6).

6. Dispositif d'accouplement selon la revendication 1, **caractérisé en ce que** la partie de protection (2) fonctionne comme un élément de précontrainte dans le sens axial.

7. Dispositif d'accouplement selon la revendication 1, **caractérisé en ce que** la barre est supportée librement sur le berceau de la barre dans le sens transversal de la machine.
